Europäisches Patentamt

European Patent Office

Office européen des brevets

(11) Numéro de publication: **0 240 402 B1**

# FASCICULE DE BREVET EUROPEEN

(45) Date de publication de fascicule du brevet:
**29.05.91**

(51) Int. Cl.⁵: **H05B 39/02, B60Q 11/00**

(21) Numéro de dépôt: **87400625.7**

(22) Date de dépôt: **20.03.87**

(54) **Procédé et dispositif pour envoyer du courant électrique dans un circuit à l'aide d'un transistor.**

(30) Priorité: **02.04.86 FR 8604706**

(43) Date de publication de la demande:
**07.10.87 Bulletin 87/41**

(45) Mention de la délivrance du brevet:
**29.05.91 Bulletin 91/22**

(84) Etats contractants désignés:
**DE GB IT SE**

(56) Documents cités:
**EP-A- 0 124 963**

(73) Titulaire: **Siemens Aktiengesellschaft**
**Wittelsbacherplatz 2**
**W-8000 München 2(DE)**

(72) Inventeur: **Grimaud, Jean-Michel**
**"Larra" Au Village**
**F-31330 Grenade(FR)**
Inventeur: **Loncle, Jean-Pierre**
**2665 Route de Villate Eaunes**
**F-31600 Muret(FR)**
Inventeur: **Salafia, Dominique**
**4 rue des Fougères**
**F-31170 Tournefeuille(FR)**

(74) Mandataire: **de Boisse, Louis Arnaud et al**
**CABINET de BOISSE 37, Avenue Franklin D.**
**Roosevelt**
**F-75008 Paris(FR)**

**Description**

La présente invention est relative à un procédé pour envoyer du courant électrique dans un circuit électrique comprenant un conducteur à forte inertie thermique et un transistor à faible inertie thermique, et à l'application de ce procédé à l'allumage des projecteurs d'un véhicule.

Dans les véhicules automobiles (véhicules légers ou véhicules industriels) la commande des ampoules d'éclairage ou de signalisation (phares, clignotants, feux stop..) s'effectue couramment soit directement à l'aide de l'interrupteur piloté par le conducteur, soit par l'intermédiaire d'un relais commandé depuis le tableau de bord.

Ces deux types de commandes sont très proches sur le plan électrique puisque dans les deux cas, la fermeture du circuit de puissance s'effectue par un contact.

En fait, le premier système tend à disparaître pour toutes les commandes de fortes puissances à cause des difficultés de cablage dues au passage des fils de section importante dans l'habitacle.

La commande par relais, bien qu'étant simple et relativement économique, présente deux inconvénients majeurs :

- d'une part, la durée de vie du contact est limitée,
- d'autre part, la protection du relais en cas de commande sur une charge en court-circuit est difficile à assurer.

Par rapport à ces techniques classiques, l'emploi de transistors paraît devoir s'imposer en raison de la suppression des inconvénients qu'on vient d'énumérer, et en plus par le fait qu'il est facile de réutiliser les informations de court-circuit et de circuit ouvert, qui sont nécessaires pour la protection du circuit de commande à semi-conducteur, afin de les transmettre à un élément qui informe le conducteur de l'état des ampoules, ou autres organes consommateurs, de son véhicule.

L'utilisation des transistors dans ce domaine ne s'est cependant pas encore répandue, du fait de contriantes spécifiques particulières : d'une part, la résistance d'une ampoule à froid est très inférieure à celle de l'ampoule à chaud, de l'ordre de 10 à 20 fois. Il en résulte que le courant de début peut avoir une intensité 10 à 20 fois supérieure à sa valeur de régime. Un transistor, par ailleurs, supporte mal d'avoir à dissiper une puissance relativement importante pendant un temps prolongé, ou une puissance plus importante pendant un temps plus court. Par exemple un transistor "explosera" s'il doit dissiper 250 watts pendant 10 ms, ou 450 watts pendant 1 ms.

Une autre contrainte résulte de la réglementation, qui, dans de nombreux cas, exige que le temps qui s'écoule avant le moment où l'ampoule est à plein régime soit inférieur, par exemple, à 10 ms.

Il est nécessaire qu'un circuit d'allumage de lampe soit, comme on l'a dit plus haut, apte à détecter des courts-circuits, et soit protégé contre ceux-ci.

Il y a donc plusieurs problèmes à résoudre :

1°) La phase d'allumage doit avoir une durée suffisamment courte pour répondre aux obligations réglementaires, mais la puissance dissipée par les transistors dans cette phase doit être maintenue dans des limites acceptables.

2°) En cas de court-circuit "franc", il faut que le système de protection réagisse avant que le transistor ne soit sorti de son aire de sécurité, définie par une intensité et une puissance maximales.

3°) En cas de court-circuit non-franc, la puissance dissipée avant détection doit être acceptable.

Pour tenir compte des limites du transistor, il paraît évident de songer à limiter le courant. Cependant, une étude plus approfondie de la question montre les résultats suivants :

a) si on limite le courant à une valeur faible, peu supérieure à celle qui correspond au régime permanent, le temps nécessaire pour allumer l'ampoule en régime sera lent, et risque de dépasser la limite réglementaire. En outre, le transistor devra dissiper une puissance appréciable pendant tout le temps de montée en température. S'il y a un court-circuit, celui-ci ne peut être détecté qu'après le temps de cette période transitoire ce qui augmente encore l'énergie à dissiper par le transistor.

b) Si on choisit pour le courant une limite plus élevée comprise entre le courant maximum correspondant à une ampoule froide et le courant de régime permanent, le temps d'allumage se réduit ainsi que la puissance totale à dissiper, mais la puissance instantanée augmente, et le transistor court encore le risque d'explosion.

c) si on choisit une limite encore plus élevée, le risque d'explosion peut s'atténuer en raison de la réduction correspondante du temps d'allumage de l'ampoule, mais il subsiste de façon aggravée en cas de court-circuit.

Pour résoudre le problème, on est parti de l'observation suivante :

Lorsque l'ampoule est à basse température, ce qui peut être considéré comme vrai pendant la plus grande partie de la phase d'allumage, les pertes thermiques par rayonnement sont très faibles. Elles sont en effet proportionnelles à la troisième puissance de l'écart de température entre le filament et le milieu environnant. De plus, la capacité thermique du filament, et donc la constante de temps de refroidissement sont très élevées. On peut donc considérer que toute l'énergie fournie est stockée dans le filament, et que celui-ci se comporte si on le compare à un composant électrique, comme un condensateur pur.

Les semi-conducteurs, par contre, possèdent des capacités thermiques et des constantes de temps beaucoup plus faibles, mais les résistances thermiques entre une puce de silicium et un refroidisseur, lequel peut être considéré comme à température constante, sont, elles-aussi, très faibles. Le semi-conducteur n'a donc pas la possibilité de stocker l'énergie, mais il peut plus facilement évacuer la puissance qui lui est fournie.

Il résulte de ceci que si l'énergie fournie est découpée à une fréquence suffisamment élevée, le transistor de puissance trouve rapidment un équilibre thermique, où la puissance moyenne fournie est égale à la puissance évacuée, alors que le filament stocke la plus grande partie de cette énergie sans la restituer. La présente invention fournit donc un procédé pour envoyer du courant électrique dans un circuit comprenant un conducteur à forte inertie thermique et dont on désire élever rapidement la température, et un transistor à faible inertie thermique et susceptible d'être endommagé par un échauffement exagéré, qui présente pour particularité qu'on découpe l'intensité du courant en impulsions dont la durée, l'intensité de crête, et l'espacement sont définis de telle sorte que la température du transistor, après une série d'impulsions,atteint une valeur de régime sensiblement stable fixée à l'avance et non susceptible de l'endommager, l'énergie électrique traversant le transistor étant par ailleurs suffisante pour échauffer le conducteur à une vitesse au moins égale à une valeur fixée à l'avance.

Lorsque le conducteur à forte inertie thermique a une résistance qui croît en fonction de la température, on prévoit avantageusement que, après que la résistance dudit conducteur à forte inertie thermique a atteint une valeur telle qu'elle limite l'intensité de crête à une valeur inférieure à celle qui a été choisie pour la phase initiale, on augmente le rapport durée/espacement des impulsions de telle sorte que la température du transistor se rapproche à nouveau de ladite valeur de régime sans toutefois la dépasser, et que la vitesse d'échauffement dudit conducteur soit relevée.

Le mode opératoire qu'on vient de décrire doit être de préférence complété par des précautions pour empêcher que la présence d'un court-circuit ne risque de détériorer un transistor de puissance, pièce relativement coûteuse.

Pour cela on prévoit avantageusement que pendant la première phase où l'intensité de crête est maintenue égale à la valeur choisie, on détecte un court-circuit en comparant la chute de tension dans le transistor à une valeur de contrôle de cette chute de tension, et que, dans les phases suivantes où l'inensité de crête est normalement commandée par la résistance du conducteur à forte inertie thermique, on détecte un court-circuit en comparant l'intensité de crête observée à une valeur de contrôle de cette intensité.

Suivant des modalités d'exécution préférées :
- on commence à détecter un court-circuit par comparaison d'intensité après un temps fixé à l'avance, et supérieur au temps normal nécessaire pour que la résistance du conducteur a forte inertie thermique parvienne à limiter l'intensité de crête,
- la valeur de contrôle de l'intensité pour la détection d'un court-circuit est inférieure à l'intensité limite choisie pour la phase initiale.

Dans le cas où on envoie du courant simultanément dans plusieurs circuits disposés en parallèle et contenant chacun au moins un conducteur à forte inertie thermique, de préférence lorsqu'on détecte un court-circuit par comparaison d'intensité dans un des circuits, on arrête le processus d'envoi du courant dans l'ensemble des circuits, on détecte ceux d'entre eux qui sont en court-circuit, puis on reprend le processus d'envoi de courant sur l'ensemble des circuits à l'exception de ceux qui sont en court-circuit. L'invention fournit en outre un dispositif pour la mise en oeuvre du procédé qu'on vient de décrire, utilisable notamment pour la commande des feux d'un véhicule, et qui comprend :
- un transistor de puissance placé sur le circuit du conducteur à alimenter,
- un limiteur d'intensité relié à une borne du transistor de puissance,
- un moyen de mesure de la tension aux bornes du transistor de puissance,
- un moyen pour comparer l'intensité traversant le transistor de puissance à une intensité limite choisie,
- un processeur de commande, qui, en fonction d'un programme pré-établi, commande le passage et l'arrêt du courant dans le transistor de puissance et fixe les intensités limites dans ce transistor, et qui interrompt l'exécution de ce programme lorsque les signaux émis par lesdits moyens de mesure de tension et/ou par ledit moyen de comparaison d'intensité correspondent à l'existence d'un court-circuit susceptible d'endommager le transistor de puissance.

Dans le cas où un tel dispositif est destiné à la commande de plusieurs circuits disposés en parallèle et comprenant chacun au moins un conducteur à forte inertie thermique, on prévoit avantageusement qu'à chaque circuit sont associés un transistor de puissance avec un limiteur d'intensité, un moyen de mesure de tension aux bornes du transistor de puissance et un moyen de comparaison d'intensité, et qu'un processeur commun aux divers circuits comprend un moyen d'interruption générale commandé par la sortie desdits moyens de comparaison d'intensité, et des moyens pour rechercher la présence d'un court-circuit sur chacun des circuits commandés, pour isoler les circuits trouvés en court-circuit et reprendre le processus sur les autres circuits.

L'invention va maintenant être exposée plus en détail à l'aide d'un exemple pratique, illustré par les dessins parmi lesquels :

Fig. 1 est un schéma d'ensemble,

Fig. 2 est un organigramme de la phase initiale du procédé,

Fig. 3 est un organigramme de la phase suivante du procédé,

Fig. 4 est un organigramme de la détection des courts-circuits par comparaison d'intensité,

Fig. 5 est un diagramme schématique du courant émis.

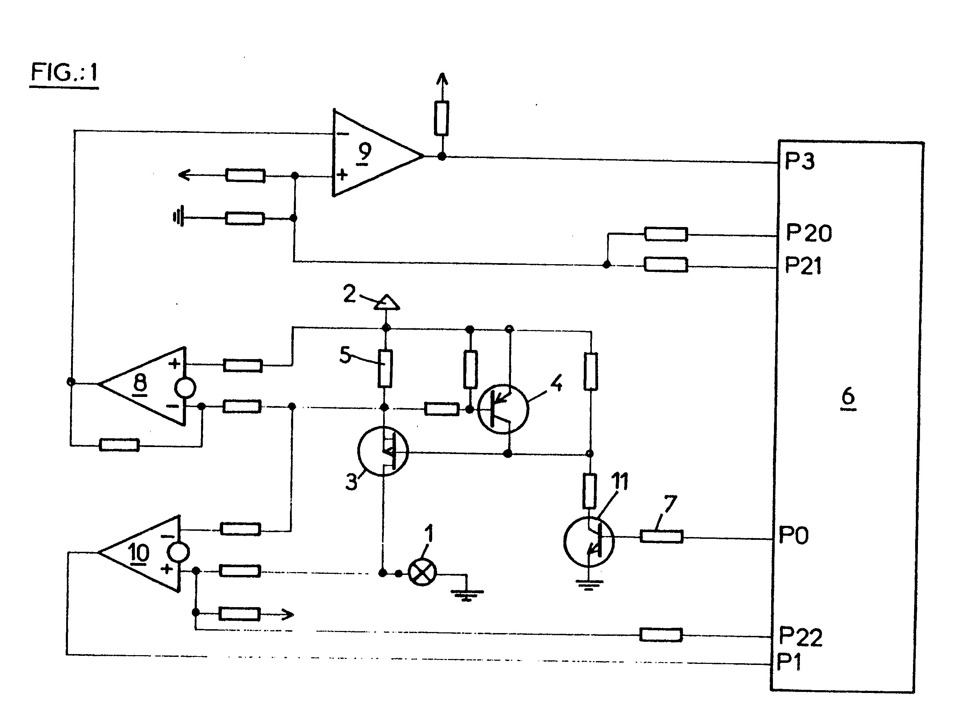

Le dispositif décrit à la Fig. 1 est destiné à alimenter une ampoule 1 à partir d'une source d'énergie 2 (batterie de véhicule), à travers un transistor MOS 3 servant de commutateur.

Le commutateur 3 est commandé par une sortie PO du processeur de commande 6 à travers une résistance 7 et un transistor 11.

Le commutateur 3 est limité en courant par un système limiteur de courant qui comprend un transistor 4 dont l'émetteur et la base sont reliés aux deux bornes d'une résistance-shunt 5 placée entre la source 2 et le commutateur 3.

Un premier circuit de détection de court-circuit comprend un ampli 8, branché aux bornes de la résistance-shunt 5. La différence de tension est comparée à une valeur fixée à l'avance dans un comparateur 9. La valeur fixée à l'avance est fournie par des sorties P20 et P21 du processeur de commande. Les signaux du comparateur sont envoyés à l'entrée P3 du processeur 6.

Un second circuit de détection de court-circuit comprend un second ampli 10, monté aux bornes du commutateur 3 et dont la valeur de seuil est commandée par la sortie P22 du processeur. Les signaux de l'amplificateur 10 sont envoyés à l'entrée P1 du processeur 6.

Le fonctionnement est le suivant en cas d'absence de court-circuit : le processeur a en mémoire une série de seuils d'intensité de courant en ordre décroissant, et associe à chaque seuil un nombre de "boucles", chaque boucle comprenant un temps de passage de courant et un temps de coupure de courant. Les boucles associées à un seuil d'intensité sont toutes les mêmes, mais à chaque valeur de seuil d'intensité sont associées des valeurs différentes ou identiques du nombre de boucles et des temps de passage ou d'arrêt du courant.

Le signaux correspondants sont appliqués au commutateur 3 par l'intermédiaire du transistor 11. Quand le nombre de boucles correspondant à un seuil donné a été exécuté, le processeur passe au seuil suivant, immédiatement inférieur.

En temps normal, l'intensité est limitée par l'impédance du dispositif, le premier circuit de détection agit alors de manière classique, en détectant une intensité anormalement élevée dans la résistance-shunt 5, ce qui commande l'arrêt de la commande d'envoi du courant par le processeur.

En période de début d'opération, l'intensité est limitée de façon effective par le limiteur de courant, le premier circuit de détection est donc inefficace. Il est alors fait appel au deuxième circuit de détection, qui compare la chute de tension dans le commutateur à une valeur limite et commande l'arrêt du processus si cette valeur est dépassée.

Le choix de cette valeur limite Vl de chute de tension est lié à celui de la valeur limite de l'intensité Il et au rapport t des temps de passage et d'arrêt du courant. Pour éviter de détériorer le transistor, il faut en effet que : Vl x Il x t soit inférieur ou égal à P, P étant la puissance maximale que peut supporter le transistor en régime continu.

On notera que, pour les mêmes raisons, la valeur du seuil d'intensité Is imposée par le premier système de détection de court-circuit doit être telle que : Z x (Is)$^2$ x t soit inférieur ou égal à P, Z étant l'impédance électrique équivalente du commutateur.

La valeur de Is est de préférence inférieure à l'intensité limite Il, par suite d'une valeur plus élevée de t. Pour cette raison, au début d'une opération, le processeur est programmé pour ne pas tenir compte des signaux du comparateur 9 au moins pendant qu'on opère avec le premier seuil.

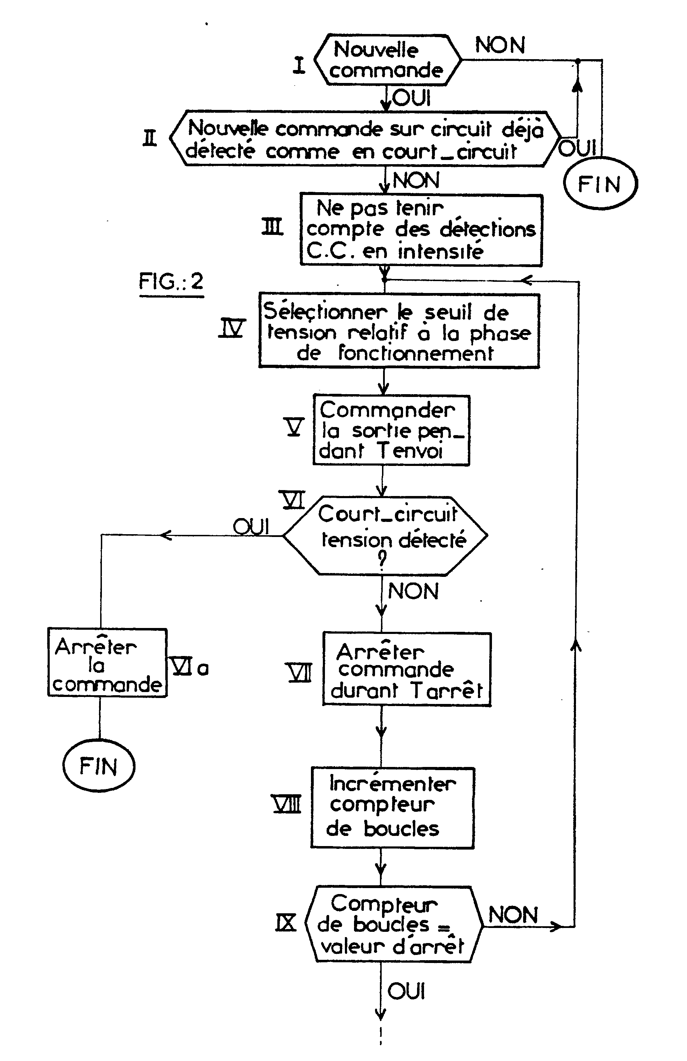

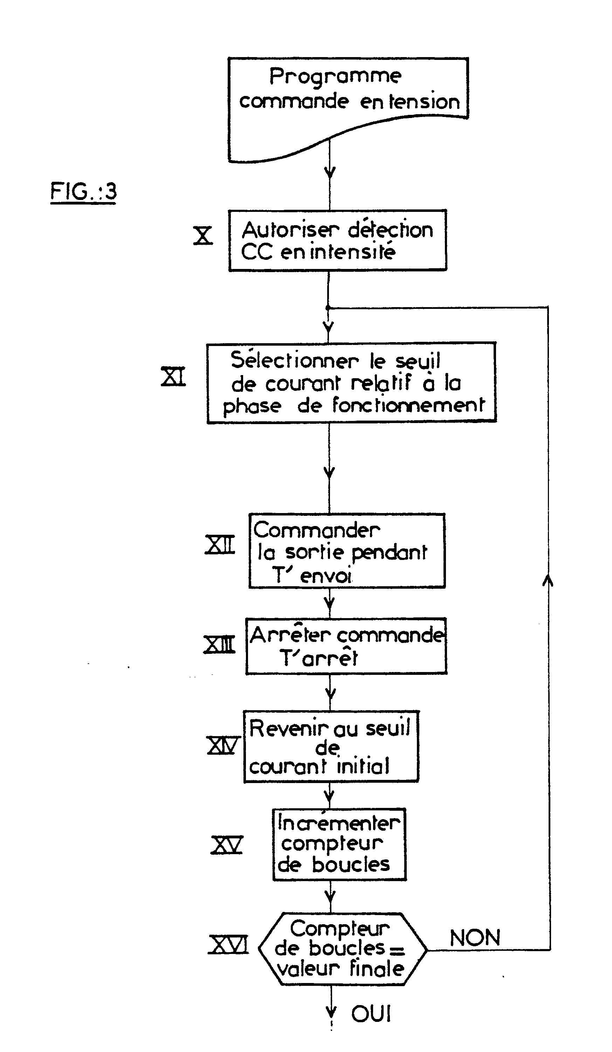

On a représenté aux Figs. 2 et 3 les organigrammes d'une série de boucles dans les étapes où l'intensité est limitée par le dispositif et dans celles où elle n'est pas limitée.

L'organigramme de la Fig. 2 est relatif aux opérations correspondant au début d'une opération d'envoi de courant.

Après avoir vérifié qu'il s'agit bien d'un début d'opération correspondant à une commande nouvelle (étape I) et éliminé le cas d'un circuit déjà détecté comme en court-circuit (étape II), on neutralise (étape III) le système de détection de courts-circuits par comparaison d'intensité, ce qui revient à neutraliser la sortie P3. A l'étape IV on sélectionne, parmi divers seuils préétablis, le seuil de tension relatif à la phase du fonctionnement concernée. Dans le cas de la première phase, la sortie P22 est passée à l'état correspondant au seuil de tension le plus élevé, ce qui revient à fixer le seuil d'intensité du courant passant dans la résistance-shunt 5 au-delà duquel l'entrée P3 change d'état en détectant un court-circuit.

A l'étape V, on agit sur PO pour commander le passage du courant à travers le commutateur 3 avec l'intensité maximale choisie, pendant un temps $T_{envoi}$.

Si, pendant ce temps $T_{envoi}$ l'entrée P1 passe de l'état 0 à l'état 1 (étape VI), cela signifie l'existence d'un court-circuit, et le processus est arrêté (étape VIa). Sinon, à la fin du temps $T_{envoi}$, on agit à nouveau sur PO pour commander la coupure du courant pendant un temps $T_{arrêt}$ (étape VII). Un compteur de boucles reçoit un incrément unitaire (étape VIII), puis le total des boucles enregistrées par le compteur est comparé au total prévu pour la phase concernée (étape IX), et selon la réponse, une nouvelle boucle est recommencée à partir de l'étape IV, ou bien on passe à une phase suivante décrite à la Fig. 3.

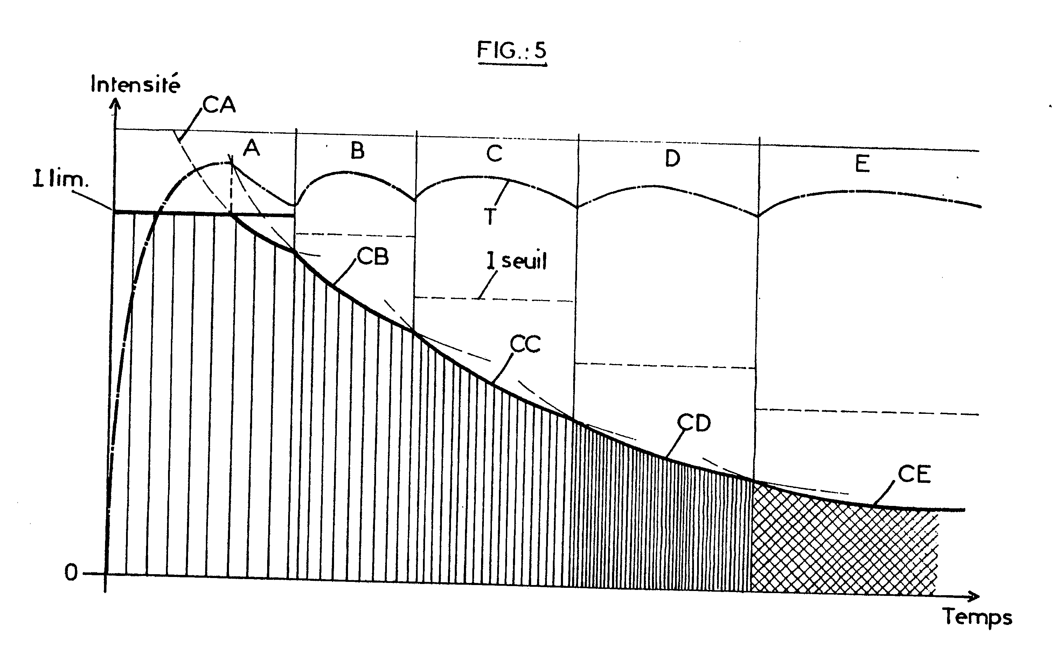

Dans le cas illustré à la Fig. 5, le seuil de tension sélectionné à la phase IV est le même pour toutes les boucles telles que celles qu'on vient de décrire. On peut cependant prévoir qu'après avoir exécuté un nombre déterminé de boucles avec une première valeur de seuil sélectionnée à la phase IV, on exécute une seconde série de boucles avec une seconde valeur de seuil, plus basse que la première, et même une troisième série, etc... avant de passer à la phase suivante qui correspond à la Fig. 3.

Les phases suivantes correspondent à la situation où la limite d'intensité est imposé par la lampe 1 et non plus par le dispositif lui-même, si bien que la détection de court-circuit se fait par comparaison d'intensité. Un étape. préalable X consiste donc à rendre possible cette détection, en déneutralisant l'entrée P3.

A l'étape XI, on agit sur P20 et/ou P21 pour déterminer la tension de référence appliquée au comparateur 9, ce qui revient à fixer le seuil d'intensité du courant passant dans la résistance-shunt 5 au-delà duquel l'entrée P3 change d'état en détectant un court-circuit.

Les étapes successives XII et XIII commandent respectivement le passage du courant dans le commutateur pendant un temps $T'_{envoi}$ et son arrêt pendant un temps $T'_{arrêt}$ par action sur la sortie PO. Ces temps sont, comme on l'a dit plus haut, différents de $T_{envoi}$ et $T_{arrêt}$ des premières boucles, le rapport des durées d'envoi de courant et d'arrêt augmente par phases successives jusqu'à atteindre un passage continu du courant.

Après le début de l'étape XIII, dans une étape XIV, les sorties P20 et P21 reviennent à leurs valeurs initiales, et deux étapes XV et XVI incrémentent un compteur de boucles et comparent le nombre des boucles réalisées au nombre de boucles prévues pour la phase. Une fois cette phase exécutée, on passe à une nouvelle phase, définie par des valeurs différentes du seuil d'intensité (positions de P20 et P21), des temps d'envoi et d'arrêt de courant, et du nombre de boucles, la dernière phase étant celle de l'envoi de courant en continu.

Les Figs. 1 à 3 sont relatives à l'envoi de courant dans une seule lampe, or un véhicule est toujours équipé d'un nombre de lampes supérieur à l'unité.

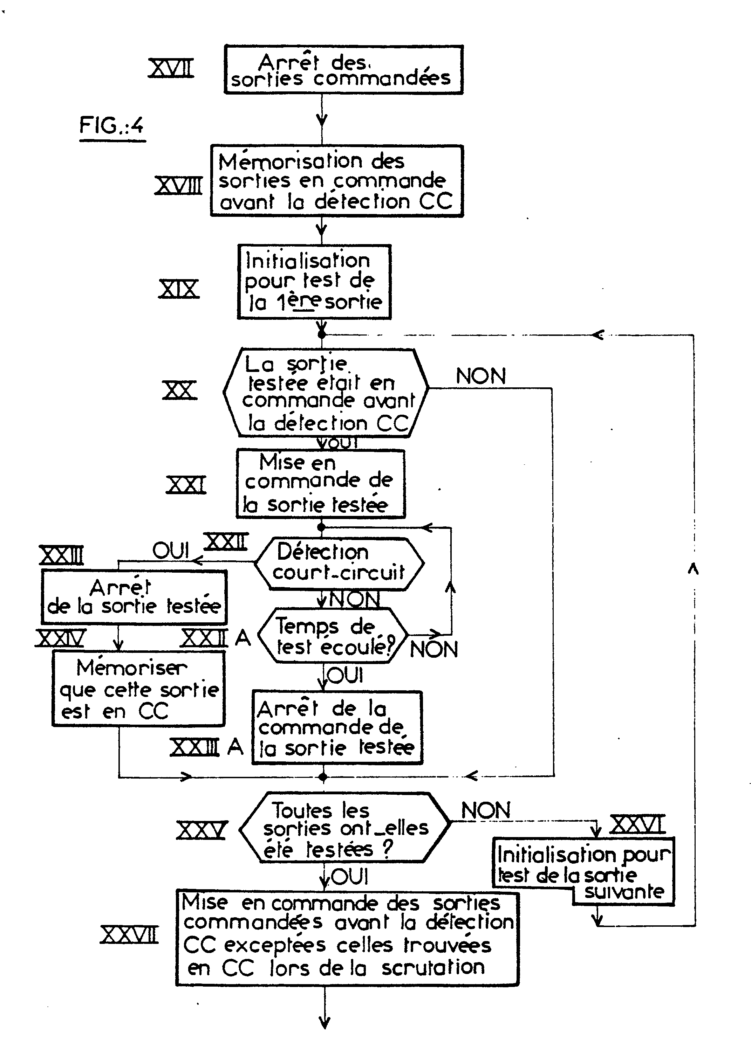

Dans la pratique, il est nécessaire qu'un transistor de puissance soit associé à chaque lampe, ou à chaque groupe de lampes fonctionnant en parallèle, mais il est préférable que le processeur de commande soit unique. Dans ce cas, le processeur 6 comprend autant de sorties PO et d'entrées P1 que de transistors de puissance 3, chaque transistor 3 étant associé par ailleurs à ses propres systèmes de détection de courts-circuits. Par ailleurs, pour des raisons de sécurité, il est avantageusement prévu qu'une détection de court-circuit soit effectuée sur tous les circuits de lampe au début de la phase objet de la Fig. 3 décrite ci-dessus. Cette détection, autorisée à partir de l'étape X, fait l'objet de la Fig. 4 qui décrit un sous-programme.

Le passage à l'état "zéro" de P3, résultant d'une détection de court-circuit, conditionne l'entrée dans ce sous-programme. La première action commande la mise à l'arrêt de toutes les sorties PO, désignées par P0o ... P0m, P0n etc. (étape XVII). On met alors en mémoire les sorties PO qui sont en commande au début du sous-programme (étape XVIII), puis on débute le test en commençant par la première sortie P0o (étape XIX). On contrôle si la sortie testée (P0n) était parmi celles qui ont été mémorisées comme en commande à l'étape XVIII (étape XX), puis on actionne cette sortie (étape XXI). Si un court-circuit est détecté par l'entrée P3 (étape XXII), on arrête la sortie P0n testée, et on la mémorise (étapes XXIII et XXIV). Si il n'y a pas de détection de court-circuit, on répète éventuellement l'étape XXII après contrôle du temps écoulé (étape XXIIA), puis on arrête la sortie correspondante, étape XXIIIA.

Dans une étape XXV on examine si toutes les sorties P0 (c'est-à-dire tous les circuits de lampes) ont été testées. Sinon, dans une étape XXVI on initialise le test pour une nouvelle sortie, en recommençant à l'étape XX. Quand toutes les sorties ont été testées, on met en commande, dans une étape XXVII, toutes celles pour lesquelles il n'a pas été détecté de court-circuit. Les signaux correspondants sont envoyés à l'étape X (Fig. 3).

La Fig 5 est un diagramme symbolique de l'intensité en fonction du temps. Cette figure montre un processus en 5 phases, A à E. Au début de la phase A, l'intensité est limitée à la valeur Ilim fixée par le dispositif. Vers la fin de la phase A, la résistance de la lampe a augmenté, et l'intensité est limitée par cette résistance, qui croît à mesure que la lampe s'échauffe, courbe CA. On passe alors à la phase B, où le rapport des durées d'envoi de courant et d'arrêt est plus grand. Il en résulte un échauffement plus rapide de la lampe qui se traduit par une courbe CB de limitation d'intensité qui a une pente plus forte. L'évolution de la température du transistor de puissance 3 est représentée de façon symbolique par la courbe T. Quand cette température a baissé, on passe à la phase suivante, les caractéristiques de chaque phase sont choisies pour que la température du transistor reste inférieure à la limite convenable pour éviter tout risque de détérioration, et en même temps pour obtenir un échauffement rapide de la lampe. La phase E correspond à l'envoi de courant en continu. Le processus d'envoi de courant selon l'invention est alors terminé. On a représenté par des droites horizontales Iseuil les valeurs d'intensité dont le dépassement correspond à la détection d'un court-circuit.

## Revendications

1. Procédé pour envoyer du courant électrique dans un circuit comprenant un conducteur à forte inertie thermique et dont on désire élever rapidement la température, et un transistor à faible inertie thermique et susceptible d'être endommagé par un échauffement exagéré, caractérisé en ce qu'on découpe l'intensité du courant en impulsions dont la durée, l'intensité de crête, et l'espacement sont définis de telle sorte que la température du transistor, après une série d'impulsions, atteint une valeur de régime sensiblement stable fixée à l'avance et non susceptible de l'endommager, l'énergie électrique traversant le transistor étant par ailleurs suffisante pour échauffer le conducteur à une vitesse au moins égale à une valeur fixée à l'avance.

2. Procédé selon la revendication 1, dans lequel le conducteur à forte inertie thermique a une résistance qui croît en fonction de la température, caractérisé en ce qu'après que la résistance dudit conducteur à forte inertie thermique a atteint une valeur telle qu'elle limite l'intensité de crête à une valeur inférieure à celle qui a été choisie pour la phase initiale, on augmente le rapport durée/espacement des impulsions de telle sorte que la température du transistor se rapproche à nouveau de ladite valeur du régime sans toutefois la dépasser, et que la vitesse d'échauffement dudit conducteur soit relevée.

3. Procédé selon la revendication 2, caractérisé en ce que pendant la première phase où l'intensité de crête est maintenue égale à la valeur choisie, on détecte un court-circuit en comparant la chute de tension dans le transistor à une valeur de contrôle de cette chute de tension, et en ce que, dans les phases suivantes où l'intensité de crête est normalement commandée par la résistance du conducteur à forte inertie thermique, on détecte un court-circuit en comparant l'intensité de crête observée à une valeur de contrôle de cette intensité.

4. Procédé selon la revendication 3, caractérisé en ce qu'on commence à détecter un court-circuit par comparaison d'intensité après un temps fixé à l'avance, et supérieur au temps normal nécessaire pour que la résistance du conducteur à forte inertie thermique parvienne à limiter l'intensité de crête.

5. Procédé selon l'une des revendications 3 ou 4, caractérisé en ce que la valeur de contrôle de l'intensité pour la détection d'un court-circuit est inférieure à l'intensité limite choisie pour la phase initiale.

6. Procédé selon l'une des revendications 4 ou 5, et dans lequel on envoie du courant simultanément dans plusieurs circuits disposés en parallèle et contenant chacun au moins un conducteur à forte inertie thermique, caractérisé en ce que lorsqu'on détecte un court-circuit par comparaison d'intensité dans un des circuits, on arrête le processus d'envoi du courant dans l'ensemble des circuits, on détecte ceux d'entre eux qui sont en court-circuit, puis on reprend le processus d'envoi de courant sur l'ensemble des circuits à l'exception de ceux qui sont en court-circuit.

7. Dispositif pour la mise en oeuvre du procédé selon l'une des revendications 3 à 6, utilisable en particulier pour la commande des feux d'un véhicule, caractérisé en ce qu'il comprend :
   - un transistor de puissance (3) placé sur le circuit du conducteur à alimenter (1),

   - un limiteur d'intensité (4) relié à une borne du transistor de puissance,

   - un moyen (10) de mesure de la tension aux bornes du transistor de puissance,

   - un moyen (5, 8) pour comparer l'intensité traversant le transistor de puissance à une intensité limite choisie,

- un processeur de commande (6), qui, en fonction d'un programme pré-établi, commande le passage et l'arrêt du courant dans le transistor de puissance et fixe les intensités limites dans ce transistor, et qui interrompt l'exécution de ce programme lorsque les signaux émis par lesdits moyens de mesure de tension et/ou par ledit moyen de comparaison d'intensité correspondent à l'existence d'un court-circuit susceptible d'endommager le transistor de puissance.

8. Dispositif selon la revendication 7, et destiné à la commande de plusieurs circuits disposés en parallèle et comprenant chacun au moins un conducteur à forte inertie thermique, caractérisé en ce qu'à chaque circuit sont associés un transistor de puissance avec un limiteur d'intensité, un moyen de mesure de tension aux bornes du transistor de puissance et un moyen de comparaison d'intensité, et en ce qu'un processeur commun aux divers circuits comprend un moyen d'interruption générale commandé par la sortie desdits moyens de comparaison d'intensité, et des moyens pour rechercher la présence d'un court-circuit sur chacun des circuits commandés, pour isoler les circuits trouvés en court-circuit et reprendre le processus sur les autres circuits.


## Claims

1. Process for sending electrical current into a circuit comprising a conductor of high thermal inertia and of which it is desired to raise the temperature rapidly, and a transistor of low thermal inertia and liable to be damaged by an excessive heating, characterised in that the intensity of the current is cut in pulses, the duration, the peak intensity and the spacing of which are defined in such a manner that the temperature of the transistor, after a series of pulses, reaches a substantially stable operating value which is predetermined and is not liable to damage it, the electrical energy flowing through the transistor being moreover sufficient to heat the conductor at a rate at least equal to a predetermined value.

2. Process according to Claim 1, in which the conductor of high thermal inertia has a resistance which increases as a function of the temperature, characterised in that, after the resistance of said conductor of high thermal inertia has reached a value such that it limits the peak intensity to a value below that which has been selected for the initial phase, the duration/spacing ratio of the pulses is increased in such a manner that the temperature of the transistor again approaches said operating value without nevertheless exceeding it, and that the rate of heating of said conductor is raised.

3. Process according to Claim 2, characterised in that during the first phase in which the peak intensity is maintained equal to the selected value, a short circuit is detected by comparing the voltage drop in the transistor with a reference value of this voltage drop, and in that, in the following phases in which the peak intensity is normally controlled by the resistance of the conductor of high thermal inertia, a short circuit is detected by comparing the peak intensity observed with a reference value of this intensity.

4. Process according to Claim 3, characterised in that detection of a short circuit is commenced by comparison of intensity after a time which is predetermined and greater than the normal time required in order that the resistance of the conductor of high thermal inertia should succeed in limiting the peak intensity.

5. Process according to one of Claims 3 or 4, characterised in that the reference value of the intensity for the detection of a short circuit is lower than the limiting intensity selected for the initial phase.

6. Process according to one of Claims 4 or 5, and in which current is sent simultaneously into a plurality of circuits arranged in parallel and each containing at least one conductor of high thermal inertia, characterised in that, when a short circuit is detected by comparison of intensity in one of the circuits, the process of sending current into all the circuits is discontinued, detection is effected of those of them which are in short circuit, and then the process of sending current is resumed on all the circuits with the exception of those which are in short circuit.

7. Device for carrying out the process according to one of Claims 3 to 6, which can be used in particular for the control of the lights of a vehicle, characterised in that it comprises:
   - a power transistor (3) located in the circuit of the conductor to be supplied (1),
   - an intensity limiter (4) connected to a terminal of the power transistor,
- a means (10) for measuring the voltage at the terminals of the power transistor,
- a means (5, 8) for comparing the intensity passing through the power transistor with a selected limiting intensity,
- a control processor (6) which, according to a pre-established program, controls the flowing and the stopping of the current in the power transistor and fixes the limiting intensities in this transistor, and which interrupts the execution of this program when the signals emitted by said means for measuring the voltage and/or by said means for comparing the intensity correspond to the existence of a short circuit liable to damage the power transistor.

8. Device according to Claim 7, and intended for the control of a plurality of circuits arranged in parallel and each comprising at least one conductor of high thermal inertia, characterised in that with each circuit there are associated a power transistor with an intensity limiter, a means for measuring the voltage at the terminals of the power transistor and a means for intensity comparison, and in that a processor common to the various circuits comprises a general switching means controlled by the output of said means for comparing the intensity, and means for searching for the presence of a short circuit in each of the controlled circuits, for isolating the circuits found to be in short circuit and resuming the procedure in the other circuits.

**Ansprüche**

1. Verfahren zum Steuern des Stroms in einem Schaltkreis mit einem Leiter mit großer thermischer Trägheit, dessen Temperatur rasch erhöht werden soll, und mit einem Transistor mit geringer thermischer Trägheit, der durch eine zu hohe Aufheizung zerstört werden kann, dadurch gekennzeichnet, daß die Stromstärke in Impulse zerlegt wird, deren Dauer, Spitzenintensität und Pause derart definiert sind, daß die Temperatur des Transistors nach einer Reihe von Impulsen einen Wert in einem vorbestimmten stabilen Bereich annimmt, in dem keine Zerstörungsgefahr besteht, während die den Transistor durchfließende elektrische Energie groß genug ist, um den Leiter mit einer Geschwindigkeit zu erwärmen, die mindestens gleich einem vorbestimmten Wert ist.

2. Verfahren nach Anspruch 1, bei dem der Leiter mit großer thermischer Trägheit ein Widerstand ist, der abhängig von der Temperatur ansteigt, dadurch gekennzeichnet, daß nachdem der Widerstand des Leiters großer thermischer Trägheit einen Wert angenommen hat, bei dem die Spitzenstromstärke auf einen Wert begrenzt ist, der unterhalb einem Wert liegt, der für die Anfangsphase ausgewählt ist, das Verhältnis von Dauer zu Pause der Impulse derart vergrößert wird, daß sich die Temperatur des Transistors einem neuen Bereichswert annähert, ohne aber diesen zu überschreiten und daß die Aufheizgeschwindigkeit des Leiters erhöht wird.

3. Verfahren nach Anspruch 2, dadurch gekennzeichnet, daß nach der ersten Phase, in der die Spitzenstromstärke auf dem gewählten Wert gehalten wird, ein Kurzschluß festgestellt wird, indem der Spannungsabfall am Transistor mit einem Kontrollwert des Spannungsabfalles verglichen wird und daß in den folgenden Phasen, in denen die Spitzenstromstärke normalerweise durch den Widerstand des Leiters mit großer thermischer Trägheit bestimmt wird, ein Kurzschluß festgestellt wird, indem die Spitzenstromstärke mit einem Kontrollwert der Stromstärke verglichen wird.

4. Verfahren nach Anspruch 3, dadurch gekennzeichnet, daß anfänglich ein Kurzschluß durch einen stromstärkenvergleich nach einer vorbestimmten Zeit festgestellt wird, die länger ist als normalerweise erforderlich, damit der Widerstand des Leiters mit großer thermischer Trägheit die Begrenzung der Spitzenstromstärke erreicht.

5. Verfahren nach einem der Ansprüche 3 oder 4, dadurch gekennzeichnet, daß der Stromstärkenkontrollwert für die Feststellung eines Kurzschlusses kleiner ist als der für die Anfangsphase gewählte Grenzwert der Stromstärke.

6. Verfahren nach einem der Ansprüche 4 oder 5, bei dem der Strom gleichzeitig in mehreren Schaltkreisen gesteuert wird, die parallel geschaltet sind und von denen jeder mindestens einen Leiter mit großer thermischer Trägheit aufweist, dadurch gekennzeichnet, daß nach dem Feststellen eines Kurzschlusses durch Stromstärkenvergleiche in einem der Schaltkreise der Vorgang der Stromsteuerung in der Anordnung der Schaltkreise unterbrochen wird, die im Kurzschluß befindlichen Schaltkreise festgestellt werden und der Vorgang der Stromsteuerung in der Anordnung der Schaltkreise wieder aufgenommen wird, mit Ausnahme der im Kurzschluß befindlichen Schaltkreise.

7. Einrichtung zum Durchführen des Verfahrens nach einem der Ansprüche 3 bis 6, insbesondere für die Beleuchtungssteuerung an einem Fahrzeug, dadurch gekennzeichnet, daß die Einrichtung aufweist:
   - einen Leistungstransistor (3), der zur Stromversorgung des Leiters (1) in dem Schaltkreis vorgesehen ist,
   - eine Stromstärkenbegrenzung (4), die mit einem Anschluß des Leistungstransistors verbunden ist,
   - Mittel (10) zum Messen der Spannung an den Anschlüssen des Leistungstransistors,
   - Mittel (5,8) zum Vergleichen der Stromstärke durch den Leistungstransistor mit einem vorbestimmten Grenzwert,
   - einen Steuerprozessor (6), der abhängig von einem vorbestimmten Programm den Durchgang und die Strompausen in dem Leistungstransistor steuert und die Stromstärkengrenzwerte in dem Transistor festlegt und der den Programmablauf unterbricht, wenn die von den Mitteln der Spannungsmessung und/oder den Mitteln des Stromvergleichs gelieferten Signale dem Vorhandensein eines Kurzschlusses entsprechen, der den Leistungstransistor zerstören kann.

8. Einrichtung nach Anspruch 7, für die Steuerung mehrerer Schaltkreise, die parallel zueinander liegen und von denen jede mindestens einen Leiter mit hoher thermischer Trägheit aufweist, dadurch gekennzeichnet, daß in jedem Schaltkreis ein Leistungstransistor mit Stromstärkenbegrenzung vorgesehen ist, sowie Mittel zur Spannungsmessung an den Anschlüssen des Leistungstransistors und Mittel für einen Stromstärkenvergleich und daß ein für alle Schaltkreise gemeinsamer Prozessor einen Unterbrecher aufweist, der vom Ausgang der Mittel für den Stromstärkenvergleich und Mittel zum Feststellen eines Kurzschlusses in jedem der gesteuerten Schaltkreise gesteuert ist, um die im Kurzschluß befindlichen Schaltkreise zu isolieren und den Vorgang in den anderen Schaltkreisen wieder aufzunehmen.

FIG.:1

FIG.: 2

EP 0 240 402 B1

FIG.:3

Programme commande en tension

X Autoriser détection CC en intensité

XI Sélectionner le seuil de courant relatif à la phase de fonctionnement

XII Commander la sortie pendant T' envoi

XIII Arrêter commande T' arrêt

XIV Revenir au seuil de courant initial

XV Incrémenter compteur de boucles

XVI Compteur de boucles = valeur finale

NON

OUI

12

## FIG.:4

**XVII** → Arrêt des sorties commandées

**XVIII** → Mémorisation des sorties en commande avant la détection CC

**XIX** → Initialisation pour test de la 1ère sortie

**XX** → La sortie testée était en commande avant la détection CC — NON

OUI

**XXI** → Mise en commande de la sortie testée

**XXII** → Détection court-circuit — OUI

**XXIII** → Arrêt de la sortie testée

NON

Temps de test écoulé? — NON

**XXIV** / **XXII A** → Mémoriser que cette sortie est en CC

OUI

**XXIII A** → Arrêt de la commande de la sortie testée

**XXV** → Toutes les sorties ont-elles été testées ? — NON

**XXVI** → Initialisation pour test de la sortie suivante

OUI

**XXVII** → Mise en commande des sorties commandées avant la détection CC exceptées celles trouvées en CC lors de la scrutation

FIG.: 5

Intensité

CA

I lim.

A    B    C    D    E

T

I seuil

CB

CC

CD

CE

0

Temps

EP 0 240 402 B1